# FASCICULE DE BREVET EUROPEEN

(11) **EP 3 492 779 B1**
(45) Date de publication et mention de la délivrance du brevet: **23.09.2020**
(21) Numéro de dépôt: 17204265.7
(22) Date de dépôt: 29.11.2017
(51) Int. Cl.: F16H 55/08, G04F 7/08, G04B 13/02, G04B 35/00

(54) **ROUE D'EMBRAYAGE A RATTRAPAGE DE JEU**
KUPPLUNGSRAD MIT SPIELNACHSTELLUNG
CLUTCH WHEEL WITH CLEARANCE ADJUSTMENT

(43) Date de publication de la demande: 05.06.2019
(73) Titulaire: Patek Philippe SA Genève, 1204 Genève (CH)
(72) Inventeur: PALERMO, Salvatore, 1242 Satigny (CH); CERATO, Stefano, 1202 Genève (CH)
(74) Mandataire: Micheli & Cie SA

(56) Documents cités:
- EP-A1- 1 437 633
- EP-A2- 2 801 868
- CH-A2- 706 624
- JP-A- 2006 078 423

## Description

La présente invention concerne une roue d'embrayage à rattrapage de jeu pour un mécanisme horloger. Elle concerne aussi un dispositif d'embrayage latéral comportant une telle roue d'embrayage.

### ART ANTERIEUR

Tout engrenage a normalement un jeu pour lui permettre de tourner. L'existence de ce jeu présente toutefois certains inconvénients dès lors qu'un mobile faisant partie d'un train d'engrenages est entraîné dans des conditions changeantes. C'est le cas par exemple lorsqu'on interrompt la marche normale d'une montre en actionnant la mise à l'heure. En effet, suite à la mise à l'heure, le rouage de minuterie présente toujours un jeu à rattraper, et l'aiguille des minutes n'est pas entraînée tant que ce jeu n'a pas été rattrapé. Ceci rend difficile la synchronisation de l'aiguille des minutes avec celle des secondes par rapport aux divisions des heures et des minutes portées par le cadran.

Les mécanismes d'affichage des secondes à entraînement indirect tels que les mécanismes de chronographes constituent également des exemples de trains d'engrenages entraînés dans des conditions changeantes. En effet, l'aiguille de chronographe ne se trouve pas dans la chaîne cinématique du rouage de finissage maintenu sous tension. C'est la raison pour laquelle on a l'habitude de prévoir un ressort de friction pour empêcher le flottement de l'aiguille des secondes du chronographe lors des arrêts et des démarrages. Cette solution présente toutefois l'inconvénient de dissiper une partie de l'énergie mécanique à disposition, ce qui peut conduire à un arrêt inopiné du chronographe.

On a déjà proposé des engrenages à rattrapage de jeu pour pièce d'horlogerie. Dans de tels engrenages, une au moins des deux dentures qui engrènent est formée de dents qui présentent chacune une fente s'étendant généralement dans le sens de la hauteur de la dent. Cette fente est conformée de manière à conférer une certaine élasticité aux flancs de la dent, de sorte que cette dernière à la possibilité de se déformer en largeur. Ainsi, l'utilisation d'un mobile muni de dents à rattrapage de jeu permet en principe de supprimer le jeu normalement nécessaire pour l'engrènement.

En horlogerie, on appelle « embrayage latéral » un mécanisme agencé pour alternativement mettre en prise et débrayer deux mobiles dentés en produisant un déplacement d'un des deux mobiles perpendiculairement à son axe de rotation. Un inconvénient connu des embrayages latéraux est leur sensibilité à la valeur du décalage angulaire entre les deux mobiles dentés. Cette sensibilité est particulièrement problématique lors de l'embrayage, c'est-à-dire lorsque les dentures des deux mobiles sont censées venir s'imbriquer l'une dans l'autre. En effet, selon les positions angulaires respectives des deux mobiles dentés, il peut arriver que deux dents buttent pointe contre pointe, l'une contre l'autre, au lieu de s'insérer chacune dans un espace de l'autre denture. De façon connue, le phénomène qui vient d'être décrit à tendance à provoquer des sauts intempestifs du rouage, soit vers l'avant, soit vers l'arrière.

A la connaissance de la demanderesse, on n'a pas proposé jusqu'ici un embrayage latéral dans lequel les dents d'au moins un des deux mobiles dentés sont à rattrapage de jeu. En effet, si l'une au moins des deux dents qui buttent l'une contre l'autre est à rattrapage de jeu, on s'expose au risque que la pointe d'une dent de l'autre mobile vienne accidentellement butter contre l'ouverture de la fente d'une des dents à rattrapage de jeu, et reste ensuite bloquée dans celle-ci.

### BREF EXPOSE DE L'INVENTION

Un but de la présente invention est de remédier aux inconvénients de l'art antérieur qui viennent d'être expliqués. La présente invention atteint ce but ainsi que d'autres en fournissant un dispositif d'embrayage latéral comportant un mobile denté à rattrapage de jeu, et qui est conforme à la revendication 1 annexée.

Conformément à l'invention, les dents du mobile à rattrapage de jeu sont au moins partiellement élastiques en raison de la présence d'une fente s'étendant généralement dans le sens de la hauteur de la dent, et séparant celle-ci en deux parties. Grâce à cette caractéristique, les dents du mobile à rattrapage de jeu sont capables, d'une part, de s'élargir élastiquement de façon à supprimer les jeux d'engrenage en réduisant, voir supprimant, l'espace entre deux dents consécutives, et capables d'autre part, de se déformer dans le sens de la largeur en cas de serrage, de façon à éviter un blocage de l'engrenage.

Selon l'invention, la première partie de chacune des dents du mobile à rattrapage de jeu est plus haute que sa deuxième partie. Chaque dent du mobile à rattrapage de jeu comporte ainsi deux sommets de hauteurs différentes.

Conformément à l'invention toujours, les dents du mobile à rattrapage de jeu ont leur première partie suffisamment plus haute que leur deuxième partie pour empêcher que la pointe d'une des dents de l'autre mobile n'ait la possibilité d'atteindre l'ouverture de la fente séparant la première de la deuxième partie d'une des dents à rattrapage de jeu. Maintenant, si on se place dans un référentiel lié au mobile à rattrapage de jeu, cela revient à dire que les trajectoires de pénétration susceptibles de permettre à la pointe d'une dent de l'autre mobile d'atteindre l'ouverture de la fente d'une des dents du mobile à rattrapage de jeu, rencontre d'abord la première partie de cette dernière dent. On comprendra donc que l'ouverture de la fente d'une dent est masquée par le sommet de la première partie de cette même dent, et si la trajectoire de la pointe d'une dent de l'autre mobile se dirige sur l'ouverture de la fente, la pointe sera déviée de sa course en rencontrant le sommet de la première partie de la dent.

Conformément à un mode particulier de réalisation de l'invention, le dispositif d'embrayage latéral comporte un troisième mobile denté agencé pour engrener en permanence avec le premier mobile denté, le support mobile étant en outre agencé de sorte que, lorsqu'il se déplace pour mettre en prise ou débrayer le premier et le deuxième mobile, il fait tourner le premier mobile denté à la manière d'un satellite autour du troisième mobile denté, les points de l'axe du premier mobile denté décrivant chacun un arc de cercle autour de l'axe du troisième mobile denté. De plus, si l'on néglige la rotation effectuée par le troisième mobile denté pendant la durée de l'embrayage, chaque point de la périphérie du premier mobile denté décrit une portion d'épicycloïde.

### BREVE DESCRIPTION DES FIGURES

D'autres caractéristiques et avantages de la présente invention apparaîtront à la lecture de la description qui va suivre, donnée uniquement à titre d'exemple non limitatif, et faite en référence aux dessins annexés dans lesquels :
- les figures 1 et 2 sont des vues en plan d'un rouage de chronographe comprenant un dispositif d'embrayage latéral conforme un premier mode de réalisation particulier de l'invention ;
- la figure 3A est une vue partielle en plan montrant la forme d'une dent du mobile à rattrapage de jeux du rouage de chronographe des figures 1 et 2;
- la figure 3B est une vue partielle en plan montrant plus particulièrement l'engrènement des dentures du premier et du deuxième mobile denté du rouage de chronographe des figures 1 et 2 ;
- la figure 4A est une vue partielle en plan semblable à la figure 3A et montrant la forme d'une dent du mobile à rattrapage de jeux d'un dispositif d'embrayage latéral conforme à un deuxième mode de réalisation de l'invention ;
- la figure 4B est une vue partielle en plan semblable à la figure 3B montrant l'engrènement des dentures du premier et du deuxième mobile denté du dispositif d'embrayage latéral qui fait l'objet de la figure 4A.

### DESCRIPTION DETAILLEE D'UN MODE DE REALISATION

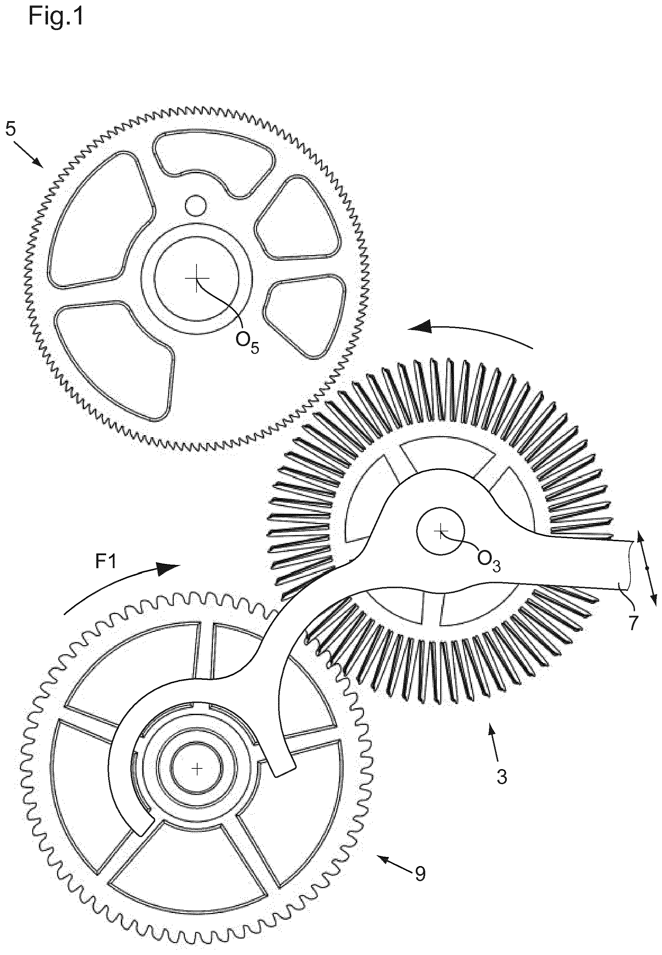

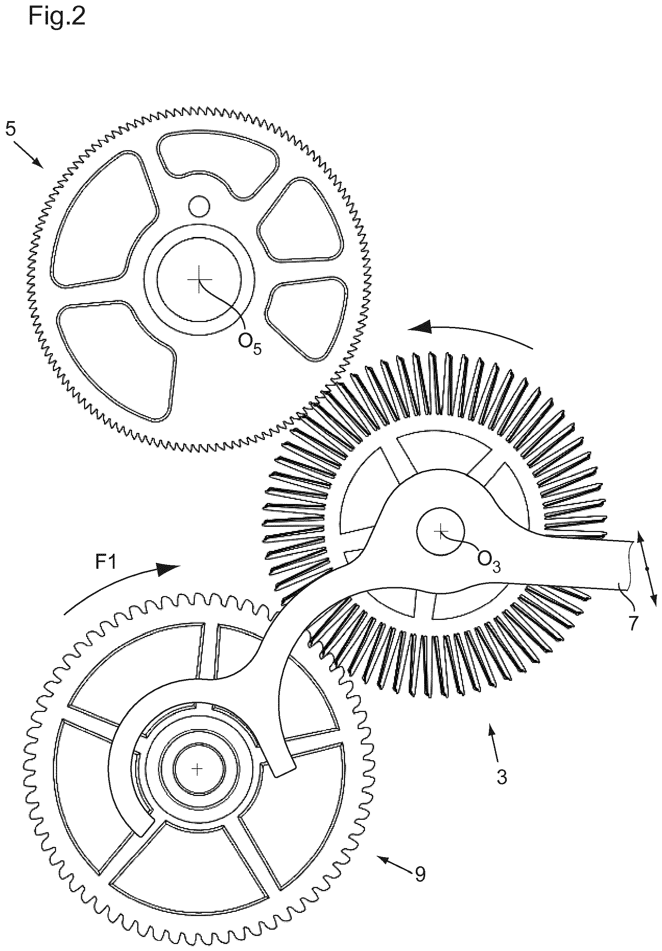

Les figures 1 et 2 sont des vues en plan de dessus montrant le rouage d'un dispositif d'embrayage latéral conforme à un premier mode de réalisation particulier de l'invention. Conformément à ce mode de réalisation, le dispositif d'embrayage de l'invention est partie intégrante du rouage de chronographe d'une montre-chronographe. La figure 2 montre le rouage de chronographe dans une configuration embrayée et la figure 1 dans une configuration débrayée. Le dispositif d'embrayage illustré comprend un premier mobile denté, constitué par une « roue intermédiaire » 3 et un deuxième mobile denté constitué par une « roue de chronographe » 5. On peut voir que la roue intermédiaire 3 est montée pivotante sur une bascule intermédiaire 7 commandée par un mécanisme non représenté de manière à la faire pivoter, dans un sens ou dans l'autre, autour de l'axe d'une troisième roue dentée 9, appelée ci-après la « roue sur champ ». On comprendra qu'en faisant pivoter la bascule 7, le mécanisme peut alternativement mettre en prise et débrayer le premier mobile denté 3 et le deuxième mobile denté 5.

Dans le présent exemple, de manière connue en soi, la roue sur champ 9 est montée coaxialement sur l'arbre de la roue des secondes (non représentée) de sorte qu'elle est entraînée par le rouage de finissage et tourne continuellement dans le sens indiqué par la flèche F1 à la vitesse d'un tour par minute. Conformément à ce que montrent les figures, la roue sur champ 9 est en outre agencée pour entraîner la roue intermédiaire, l'engrenage entre la roue sur champ et la roue intermédiaire n'étant pas débrayable. On comprendra donc que la roue sur champ 9 ne fait pas, à proprement parler, partie du dispositif d'embrayage latéral de l'invention, et que les premier et deuxième mobiles dentés de l'invention sont respectivement constitués par la roue intermédiaire 3 et la roue de chronographe 5.

La roue de chronographe 5 est prévue pour porter l'aiguille de chronographe (ou trotteuse, non représentée). La roue sur champ, la roue intermédiaire et la roue de chronographe sont agencées pour tourner dans un même plan. Cette configuration permet à la roue intermédiaire 3 d'engrener en permanence avec la roue sur champ 9 et d'occuper alternativement une position embrayée (figure 2) dans laquelle elle entraîne la roue de chronographe 5 (en faisant donc office de renvoi pour transmettre le mouvement de la roue sur champ à la roue de chronographe), et une position débrayée (figure 1) dans laquelle elle n'est pas en prise avec la roue de chronographe. Le porteur de la montre peut commander le passage de la position débrayée à la position embrayée et réciproquement, en actionnant manuellement un bouton-poussoir (non représenté) de manière à faire pivoter la bascule intermédiaire 7 alternativement dans un sens et dans l'autre. Un frein (non représenté) est encore prévu pour immobiliser la roue de chronographe 5 lorsque la roue intermédiaire 3 est en position débrayée.

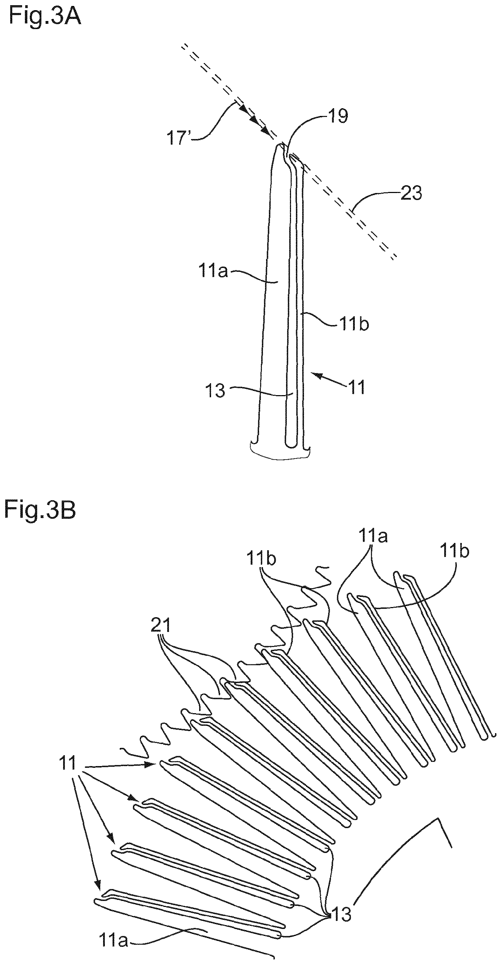

Conformément à l'invention, l'un des deux mobiles dentés est un mobile à rattrapage de jeu. On peut voir que dans l'exemple illustré, le mobile à rattrapage de jeu est le premier mobile denté (c'est à dire la roue intermédiaire 3). Les figures 3A et 3B sont des vues partielles en plan montrant plus particulièrement la forme des dents du mobile à rattrapage de jeu du dispositif d'embrayage. Conformément à l'invention, la denture du mobile à rattrapage de jeu est une denture souple formée de dents 11 comportant chacune une fente 13 séparant la dent en une première et une deuxième partie. La première partie 11a de la dent correspond à la partie de celle-ci qui s'étend entre son flanc actif et la fente 13, et la deuxième partie 11b correspond à la partie qui s'étend entre la fente 13 et le flanc inactif de la dent. On rappellera ici que dans le contexte d'un engrenage entre deux mobiles dentés, l'homme du métier appelle flanc « actif » d'une dent, le flanc de cette dent à travers lequel s'exerce la force d'entraînement d'un des mobiles dentés par l'autre. Le flanc opposé de la dent est appelé le flanc « inactif ». On comprendra que dans le présent exemple, les deux mobiles dentés à considérer sont la roue intermédiaire et la roue de chronographe, et que le flanc actif des dents de la roue intermédiaire correspond à leur flanc avant.

En se référant maintenant plus particulièrement à la figure 3B, on peut voir que les dents 11 à rattrapage de jeu engrènent avec les dents 21 de la roue de chronographe 5. On peut voir en outre que dans l'exemple illustré, chaque espace libre entre deux dents 11 consécutives de la roue intermédiaire 3 embrasse deux dents 21 de la roue de chronographe. Comme dans le présent exemple, les rapports d'engrenage sont égaux à 1, on comprendra que le nombre de dents 21 de la roue de chronographe 5 est double du nombre de dents 11 de la roue intermédiaire 3.

Conformément à l'invention, la fente 13 est agencée pour donner une élasticité sensiblement plus grande à la deuxième partie 11b de chaque dent 11 qu'à la première 11a, de sorte que la deuxième partie est libre de fléchir en direction de la première partie. À cet égard, on peut voir que dans l'exemple illustré les dents 11 à rattrapage de jeu sont asymétriques, la première partie des dents étant sensiblement plus épaisse que leur deuxième partie. De plus, on peut encore observer que la première partie 11a de chaque dent est sensiblement plus haute que la deuxième partie 11b. On peut donc considérer que chaque dent du mobile à rattrapage de jeu comporte deux sommets de hauteurs différentes, ces deux sommets étant situés de part et d'autre de l'ouverture 19 de la fente 13. De plus, conformément à la variante qui fait l'objet du présent exemple, la fente 13 de la dent 11 comporte une portion supérieure qui fait un crochet en direction de la première partie 11a de la dent, de sorte à décaler l'ouverture 19 de la fente 13 en direction de la première partie 11a. La figure 3 montre encore que la première 11a et la deuxième partie 11b ont des formes complémentaires, la deuxième partie présentant, proche de son extrémité, un élargissement faisant saillie en direction de la première partie, et la première partie présentant un épaulement en regard de l'élargissement, la portion supérieure en crochet de la fente 13 passant entre l'élargissement et l'épaulement.

Conformément à l'invention, la première partie 11a de chacune des dents du mobile à rattrapage de jeu 3 est suffisamment plus haute que la deuxième partie 11b pour que, lorsque le mobile à rattrapage de jeu est positionné angulairement de manière à ce que la trajectoire du sommet d'une dent 21 de la roue de chronographe 5 intersecte l'ouverture de la fente 13 d'une des dents du mobile à rattrapage de jeu, ladite trajectoire intersecte également le sommet de la première partie 11a de ladite dent du mobile à rattrapage de jeu. La figure 3A montre une droite oblique référencée 17' qui traverse la fente 13 au niveau de son ouverture (référencée 19) et qui coupe les sommets de la première et de la deuxième partie de la dent 11 de part et d'autre de l'ouverture. La droite oblique 17' illustre la direction selon laquelle arriverait, dans un référentiel lié à la dent 11, la pointe d'une dent 21 de la roue de chronographe 5 qui suivrait une trajectoire qui intersecte l'ouverture 19. En se référant toujours à la figure 3A, on peut voir que la trajectoire 17' bute contre le sommet de la première partie 11a de la dent 11 avant d'avoir pu atteindre l'ouverture 19. On comprendra donc que, de manière générale, l'ouverture 19 de la fente 13 est toujours masquée par le sommet de la première partie 11a de cette même dent, et que la dent 21 de l'autre mobile est déviée de sa course en rencontrant le sommet de la première partie de la dent 11.

On peut voir que la figure 3A contient une deuxième droite oblique 23 qui est parallèle à la droite oblique 17'. La droite oblique 23 est en outre tangente au sommet de la première partie 11a de la dent 11, et on peut voir qu'elle coupe le sommet de la deuxième partie 11b tout près de son sommet. En effet dans l'exemple illustré, lorsque la dent 11 est au repos, l'inclinaison d'une tangente commune au profil de la première et de la deuxième partie de la dent 11, est légèrement moins forte que l'inclinaison des deux droites obliques 17' et 23. Dans ces conditions, lorsque durant l'embrayage, la pointe d'une dent 21 de la roue de chronographe 5 parcourt une trajectoire qui est tangente à la droite oblique 23 au voisinage des sommets des deux parties de la dent 11, la pointe de la dent 21 va heurter le sommet de la deuxième partie 11b de la dent 11. Toutefois, comme le montre la figure, l'angle d'incidence de la trajectoire de la pointe de la dent 21 sur la surface du sommet de la deuxième partie 11b est proche de 90° (incidence rasante). Dans ces conditions, l'effet produit par l'impact de la pointe de la dent 21 sur le sommet de la deuxième partie de la dent 11 est de rabattre la deuxième partie en direction de la première, de façon à libérer un passage pour la dent 21. En effet, l'inclinaison d'une tangente commune au profil de la première et de la deuxième partie de la dent 11, lorsque la deuxième partie 11b se trouve en butée contre la première partie 11a, est légèrement plus forte que l'inclinaison des droites obliques 17' et 23. On comprendra donc que grâce aux caractéristiques du présent paragraphe, la deuxième partie de la dent 11 peut s'effacer devant la dent 21 de manière à éviter que la roue de chronographe 5 n'effectue un saut en arrière lors de l'embrayage.

La manière de calculer l'angle de pénétration de la pointe d'une dent 21 de la roue de chronographe 5 dans la denture de la roue intermédiaire 3 ne sera pas expliquée plus en détail dans la présente description. Toutefois, le document de brevet EP 1 437 633 A1 décrit une méthode pour calculer la tangente de cet angle de pénétration. L'homme du métier ne rencontrera pas de problème particulier pour adapter l'enseignement de ce document antérieur, afin de mettre en œuvre la présente invention à la lumière de la présente description.

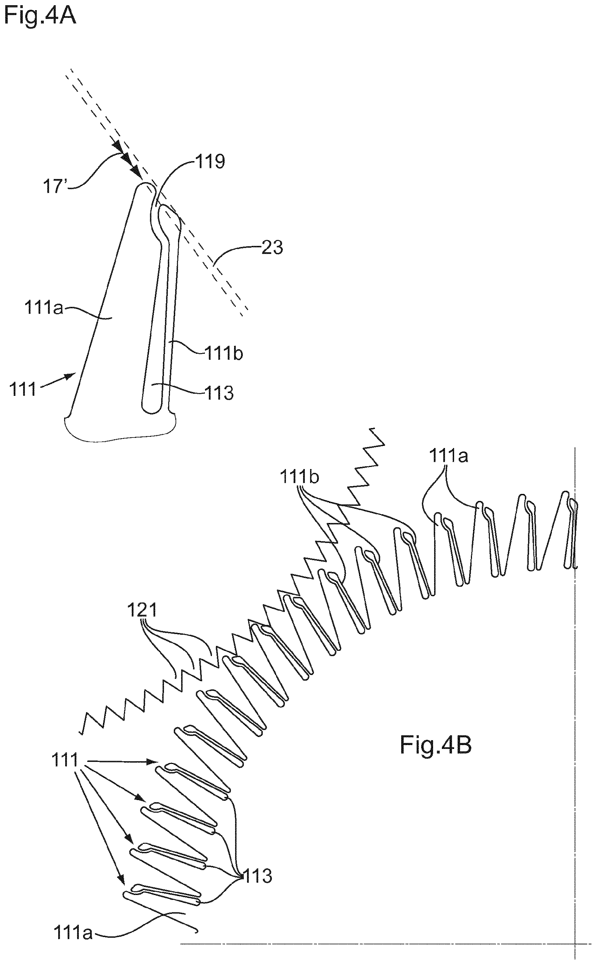

Les figures 4A et 4B sont des vues partielles en plan semblables aux figures 3A et 3B mais qui montrent l'engrènement et la forme des dents du premier et du deuxième mobile denté d'un dispositif d'embrayage latéral conforme à un deuxième mode de réalisation de l'invention. Une première différence entre le dispositif d'embrayage des figures 4A et 4B par rapport à celui des figures 3A et 3B est que, comme le montre la figure 4B, le flanc actif et le flanc inactif des dents 121 de la roue de chronographe 5 sont droits tous les deux. En effet, la denture de la roue chronographe illustrée dans cet exemple est une denture triangulaire.

On comprendra en outre que diverses modifications et/ou améliorations évidentes pour un homme du métier peuvent être apportées aux modes de réalisation qui font l'objet de la présente description sans sortir du cadre de la présente invention définie par les revendications annexées.

## Revendications

1. Dispositif d'embrayage latéral comportant un premier mobile denté (3) monté pivotant autour d'un premier centre (O₃) sur un support mobile (7), un deuxième mobile denté (5) monté pivotant autour d'un deuxième centre (O₅) parallèlement au premier mobile denté, et un mécanisme agencé pour alternativement mettre en prise et débrayer le premier et le deuxième mobile en produisant un déplacement du support mobile dans un plan perpendiculaire aux axes de pivotement du premier et du deuxième mobiles dentés ; **caractérisé**
**en ce que** l'un parmi le premier et le deuxième mobile denté est un mobile à rattrapage de jeu (3) présentant une denture souple formée de dents (11 ; 111) comportant chacune un flanc actif, un flanc inactif, ainsi qu'une fente (13 ; 113) ouverte vers le haut de la dent et séparant cette dernière en une première (11a ; 111a) et une deuxième partie (11b ; 111b), la première partie s'étendant entre la fente et le flanc actif et la deuxième partie s'étendant entre la fente et le flanc inactif, la fente étant agencée pour donner une élasticité sensiblement plus grande à la deuxième partie qu'à la première, de sorte que la deuxième partie (11b; 111b) est libre de fléchir en direction de la première partie (11a ; 111a) ; et
**en ce que** la première partie (11a ; 111a) de chacune des dents (11 ; 111) du mobile à rattrapage de jeu (3) est suffisamment plus haute que la deuxième partie (11b; 111b) pour que, lorsque, au moment de l'embrayage, le mobile à rattrapage de jeu est positionné angulairement de manière à ce que, dans un référentiel lié au mobile à rattrapage de jeu, la trajectoire de pénétration du sommet d'une des dents de l'autre mobile (5) parmi le premier et le deuxième mobile denté, dans la denture du mobile à rattrapage de jeu intersecte l'ouverture (19 ; 119) de la fente (13 ; 113) d'une des dents (11 ; 111) du mobile à rattrapage de jeu, ladite trajectoire intersecte également le sommet de la première partie (11a ; 111a) de ladite dent du mobile à rattrapage de jeu.

2. Dispositif d'embrayage latéral conforme à la revendication 1, **caractérisé en ce que**, lorsqu'une dent (11 ; 111) à rattrapage de jeu est au repos, l'angle que fait une tangente commune au profil de la première (11a ; 111a) et de la deuxième partie (11b ; 111b) de la dent avec l'axe radial de cette dent est plus grand que l'angle que fait ladite trajectoire (17') avec la ligne des centres (O₃, O₅), et **en ce que** lorsque la deuxième partie (11b; 111b) de la dent (11 ; 111) se trouve en butée contre la première partie (11a; 111a), l'angle que fait une tangente commune au profil de la première (11a ; 111a) et de la deuxième partie (11b; 111b) de la dent (11 ; 111) avec l'axe radial de cette dent est plus petit que l'angle que fait ladite trajectoire (17') avec la ligne des centres.

3. Dispositif d'embrayage latéral conforme à la revendication 1 ou 2, **caractérisé en ce que** la fente (13; 113) des dents (11 ; 111) du mobile à rattrapage de jeu s'étend généralement dans le sens de la hauteur de la dent, la fente comportant toutefois une portion supérieure qui fait un crochet en direction de la première partie (11a ; 111a) de la dent, de sorte à décaler l'ouverture (19 ; 119) de la fente (13 ; 113).

4. Dispositif d'embrayage latéral conforme à la revendication 3, **caractérisé en ce que** la première (11a ; 111a) et la deuxième partie (11b ; 111b) ont des formes complémentaires, la deuxième partie (11b; 111b) présentant, proche de son extrémité, un élargissement faisant saillie en direction de la première partie (11a ; 111a), et la première partie présentant un épaulement en regard de l'élargissement, la portion supérieure en crochet de la fente passant entre l'élargissement et l'épaulement.

5. Dispositif d'embrayage latéral conforme à l'une quelconque des revendications précédentes, **caractérisé en ce qu'**il comporte un troisième mobile denté (9) agencé pour être entraîné par le rouage de finissage de manière à tourner continuellement dans un seul sens (F1), le premier mobile denté (3) étant agencé pour engrener en permanence avec le troisième mobile denté (9), et le support mobile (7) étant en outre agencé de sorte que les points de l'axe du premier mobile denté (3) décrivent chacun un arc de cercle autour de l'axe du troisième mobile denté (9), en sens opposé au dit sens (F1) lorsque le premier (3) et le deuxième (5) mobiles dentés sont mis en prise, et dans ledit seul sens (F1) lorsque le premier et le deuxième mobiles dentés sont débrayés.

6. Dispositif d'embrayage latéral conforme à l'une quelconque des revendications précédentes, **caractérisé en ce que** le flanc actif des dents (21) du dit autre mobile (5) parmi le premier et le deuxième mobile denté, est convexe au moins dans la partie destinée à coopérer avec la denture du mobile à rattrapage de jeu (3).

7. Dispositif d'embrayage latéral conforme à l'une quelconque des revendications 1 à 5, **caractérisé en ce que** le flanc actif des dents (121) du dit autre mobile (5) parmi le premier et le deuxième mobile denté, est droit au moins dans la partie destinée à coopérer avec la denture du mobile à rattrapage de jeu (3).

8. Dispositif d'embrayage latéral conforme à la revendication 2, **caractérisé en ce que** l'angle que fait le flanc inactif de chaque dent (21 ; 121) du dit autre (5) parmi le premier et le deuxième mobile denté, avec l'axe de cette dent est sensiblement égal à l'angle que fait ladite trajectoire (17') avec la ligne des centres (O₃, O₅), au moins dans la partie de cette dent destinée à coopérer avec la roue à rattrapage de jeu (3).

9. Dispositif d'embrayage latéral conforme à l'une quelconque des revendications précédentes, **caractérisé en ce que** les nombres de dents, respectivement du premier mobile denté (3) et du deuxième mobile denté (5), sont tels que chaque espace libre entre deux dents (11 ; 111) consécutives du premier mobile denté (3) embrasse deux dents (21 ; 121) du deuxième mobile denté (5).

## Patentansprüche

1. Seitliche Kupplungsvorrichtung, die ein erstes gezahntes Drehteil (3), das um eine erste Mitte (O₃) auf einer beweglichen Stütze (7) drehbar gelagert ist, ein zweites gezahntes Drehteil (5), das um eine zweite Mitte (O₅) parallel zum ersten gezahnten Drehteil drehbar gelagert ist, und einen Mechanismus umfasst, der gestaltet ist, um das erste und das zweite Drehteil durch Erzeugen einer Verlagerung der beweglichen Stütze in einer Ebene senkrecht zu den Drehachsen des ersten und des zweiten gezahnten Drehteils wechselweise in Eingriff zu bringen und auszukuppeln; **dadurch gekennzeichnet**
**dass** eines von dem ersten und dem zweiten gezahnten Drehteil ein Drehteil mit Spielnachstellung (3) ist, das eine nachgiebige Zahnung aufweist, die aus Zähnen (11; 111) gebildet ist, die jeweils eine aktive Flanke, eine inaktive Flanke sowie einen Spalt (13; 113) umfassen, der hin zu dem oberen Teil des Zahnes offen ist und diesen letzteren in einen ersten (11a; 111a) und einen zweiten Teil (11b; 111b) trennt, wobei der erste Teil sich zwischen dem Spalt und der aktiven Flanke erstreckt und der zweite Teil sich zwischen dem Spalt und der inaktiven Flanke erstreckt, wobei der Spalt gestaltet ist, um dem zweiten Teil eine wesentlich größere Elastizität zu verleihen als dem ersten, derart dass der zweite Teil (11b; 111b) frei in Richtung des ersten Teils (11a; 111a) nachgeben kann; und
**dass** der erste Teil (11a; 111a) von jedem der Zähne (11; 111) des Drehteils mit Spielnachstellung (3) ausreichend höher als der zweite Teil (11b; 111b) ist, damit, wenn das Drehteil mit Spielnachstellung im Moment des Einkuppelns derart winklig positioniert ist, dass in einem Bezugssystem, das mit dem Drehteil mit Spielnachstellung verbunden ist, die Bahn des Eindringens der Spitze von einem von den Zähnen des anderen Drehteils (5) von dem ersten und dem zweiten gezahnten Drehteil in die Zahnung des Drehteils mit Spielnachstellung die Öffnung (19; 119) des Spalts (13; 113) von einem der Zähne (11; 111) des Drehteils mit Spielnachstellung schneidet, die Bahn auch die Spitze des ersten Teils (11a; 111a) des Zahns des Drehteils mit Spielnachstellung schneidet.

2. Seitliche Kupplungsvorrichtung nach Anspruch 1, **dadurch gekennzeichnet, dass**, wenn ein Zahn (11; 111) mit Spielnachstellung sich in der Ruheposition befindet, der Winkel, den eine Tangente, die dem Profil des ersten (11a; 111a) und des zweiten Teils (11b; 111b) des Zahns gemein ist, mit der radialen Achse dieses Zahnes bildet, größer ist als der Winkel, den die Bahn (17') mit der Linie der Mittelpunkte (O₃, O₅) bildet, und dass, wenn der zweite Teil (11b; 111b) des Zahnes (11; 111) sich gegen den ersten Teil (11a; 111a) in Anschlag befindet, der Winkel, den eine Tangente, die dem Profil des ersten (11a; 111a) und des zweiten Teils (11b; 111b) des Zahnes (11; 111) gemein ist, mit der radialen Achse dieses Zahns bildet, kleiner als der Winkel ist, den die Bahn (17') mit der Linie der Mittelpunkte bildet.

3. Seitliche Kupplungsvorrichtung nach Anspruch 1 oder 2, **dadurch gekennzeichnet, dass** der Spalt (13; 113) der Zähne (11; 111) des Drehteils mit Spielnachstellung sich allgemein im Sinne der Höhe des Zahnes erstreckt, wobei der Spalt indes einen oberen Abschnitt umfasst, der einen Haken in Richtung des ersten Teils (11a; 111a) des Zahnes bildet, derart, dass die Öffnung (19; 119) von dem Spalt (13; 113) versetzt ist.

4. Seitliche Kupplungsvorrichtung nach Anspruch 3, **dadurch gekennzeichnet, dass** der erste (11a; 111a) und der zweite Teil (11b; 111b) ergänzende Formen aufweisen, wobei der zweite Teil (11b; 111b) in der Nähe seines Endes eine Erweiterung aufweist, die in Richtung des ersten Teils (11a; 111a) hervorsteht, und der erste Teil der Erweiterung gegenüberstehend eine Schulter aufweist, wobei der hakenförmige obere Abschnitt des Spalts zwischen der Erweiterung und der Schulter verläuft.

5. Seitliche Kupplungsvorrichtung nach einem der vorhergehenden Ansprüche, **dadurch gekennzeichnet, dass** sie ein drittes gezahntes Drehteil (9) umfasst, das gestaltet ist, um derart durch das Finissage-Räderwerk angetrieben zu werden, dass es sich ununterbrochen in einen einzigen Sinn (F1) dreht, wobei das erste gezahnte Drehteil (3) gestaltet ist, um ständig mit dem dritten gezahnten Drehteil (9) ineinanderzugreifen, und die bewegliche Stütze (7) ferner derart gestaltet ist, dass die Punkte der Achse des ersten gezahnten Drehteils (3) jeweils einen Kreisbogen um die Achse des dritten gezahnten Drehteils (9) im dem Sinne (F1) entgegengesetzten Sinne, wenn das erste (3) und das zweite (5) gezahnte Drehteil in Eingriff gebracht sind, und in dem einzigen Sinne (F1) bilden, wenn das erste und das zweite gezahnte Drehteil ausgekuppelt sind.

6. Seitliche Kupplungsvorrichtung nach einem der vorhergehenden Ansprüche, **dadurch gekennzeichnet, dass** die aktive Flanke der Zähne (21) des anderen Drehteils (5) von dem ersten und dem zweiten gezahnten Drehteil zumindest in dem Teil, der dazu bestimmt ist, mit der Zahnung des Drehteils mit Spielnachstellung (3) zusammenzuwirken, konvex ist.

7. Seitliche Kupplungsvorrichtung nach einem der Ansprüche 1 bis 5, **dadurch gekennzeichnet, dass** die aktive Flanke der Zähne (121) des anderen Drehteils (5) von dem ersten und dem zweiten gezahnten Drehteil zumindest in dem Teil, der dazu bestimmt ist, mit der Zahnung des Drehteils mit Spielnachstellung (3) zusammenzuwirken, gerade ist.

8. Seitliche Kupplungsvorrichtung nach Anspruch 2, **dadurch gekennzeichnet, dass** der Winkel, den die inaktive Flanke von jedem Zahn (21; 121) von dem anderen (5) von dem ersten und dem zweiten gezahnten Drehteil mit der Achse dieses Zahnes bildet, zumindest in dem Teil dieses Zahnes, der dazu bestimmt ist, mit dem Rad mit Spielnachstellung (3) zusammenzuwirken, im Wesentlichen gleich der Winkel ist, den die Bahn (17') mit der Linie der Mittelpunkte (O₃, O₅) bildet.

9. Seitliche Kupplungsvorrichtung nach einem der vorhergehenden Ansprüche, **dadurch gekennzeichnet, dass** die Anzahlen von Zähnen des ersten gezahnten Drehteils (3) beziehungsweise des zweiten gezahnten Drehteils (5) derart sind, dass jeder freie Raum zwischen zwei aufeinanderfolgenden Zähnen (11; 111) des ersten gezahnten Drehteils (3) zwei Zähne (21; 121) des zweiten gezahnten Drehteils (5) umfasst.

## Claims

1. Lateral coupling device comprising a first toothed mobile (3) mounted so as to pivot about a first centre (O₃) on a mobile support (7), a second toothed mobile (5) mounted so as to pivot about a second centre (O₅) in parallel with the first toothed mobile, and a mechanism arranged to alternately engage and decouple the first and second mobile by producing a movement of the mobile support in a plane perpendicular to the pivoting axes of the first and second toothed mobiles;
**characterised in that**
one of the first and second toothed mobiles is a play take-up mobile (3) having a flexible toothing arrangement formed of teeth (11; 111) each having an active flank, an inactive flank and a slot (13; 113) which is open towards the top of the tooth and separates this tooth into a first (11a; 111a) and second (11b; 111b) part, the first part extending between the slot and the active flank and the second part extending between the slot and the inactive flank, the slot being arranged to provide substantially greater elasticity to the second part than to the first part, such that the second part (11b; 111b) is free to flex towards the first part (11a; 111a); and
the first part (11a; 111a) of each of the teeth (11; 111) of the play take-up mobile (3) is sufficiently higher than the second part (11b; 111b) such that, when - at the time of coupling - the play take-up mobile is positioned angularly such that, in a frame of reference linked with the play take-up mobile, the penetration path of the tip of one of the teeth of the other mobile (5) of the first and second toothed mobiles into the toothing arrangement of the play take-up mobile intersects with the opening (19; 119) of the slot (13; 113) of one of the teeth (11; 111) of the play take-up mobile, said path likewise intersects with the tip of the first part (11a; 111a) of said tooth of the play take-up mobile.

2. Lateral coupling device as claimed in claim 1, **characterised in that**, when a play take-up tooth (11; 111) is at rest, the angle formed by a tangent common to the profile of the first (11a; 111a) and second (11b; 111b) part of the tooth with the radial axis of this tooth is greater than the angle formed by said path (17') with the line of the centres (O₃, O₅), and **in that**, when the second part (11b; 111b) of the tooth (11; 111) is in abutment against the first part (11a; 111a), the angle formed by a tangent common to the profile of the first (11a; 111a) and second (11b; 111b) part of the tooth (11; 111) with the radial axis of this tooth is smaller than the angle formed by said path (17') with the line of the centres.

3. Lateral coupling device as claimed in claim 1 or 2, **characterised in that** the slot (13; 113) of the teeth (11; 111) of the play take-up mobile generally extends in the direction of the height of the tooth, the slot however comprising an upper portion which forms a hook in the direction of the first part (11a; 111a) of the tooth so as to offset the opening (19; 119) of the slot (13; 113).

4. Lateral coupling device as claimed in claim 3, **characterised in that** the first (11a; 111a) and the second (11b; 111b) parts have complementary shapes, the second part (11b; 111b) having, close to its end, an enlargement protruding in the direction of the first part (11a; 111a), and the first part having a shoulder facing the enlargement, the upper hook portion of the slot passing between the enlargement and the shoulder.

5. Lateral coupling device as claimed in any one of the preceding claims, **characterised in that** it comprises a third toothed mobile (9) arranged to be driven by the going train so as to continually rotate in a single direction (F1), the first toothed mobile (3) being arranged to permanently mesh with the third toothed mobile (9), and the mobile support (7) further being arranged such that the points of the axis of the first toothed mobile (3) each describe a circular arc around the axis of the third toothed mobile (9) in the direction opposite to said single direction (F1) when the first (3) and second (5) toothed mobiles are engaged, and in said single direction (F1) when the first and second toothed mobiles are decoupled.

6. Lateral coupling device as claimed in any one of the preceding claims, **characterised in that** the active flank of the teeth (21) of said other mobile (5) of the first and second toothed mobiles is convex at least in the part intended to cooperate with the toothing arrangement of the play take-up mobile (3).

7. Lateral coupling device as claimed in any one of claims 1 to 5, **characterised in that** the active flank of the teeth (121) of said other mobile (5) of the first and second toothed mobile is straight at least in the part intended to cooperate with the toothing arrangement of the play take-up mobile (3).

8. Lateral coupling device as claimed in claim 2, **characterised in that** the angle formed by the inactive flank of each tooth (21; 121) of said other mobile (5) of the first and second toothed mobile with the axis of this tooth is substantially equal to the angle formed by said path (17') with the line of the centres (O₃, O₅) at least in the part of this tooth intended to cooperate with the play take-up wheel (3).

9. Lateral coupling device as claimed in any one of the preceding claims, **characterised in that** the number of teeth of the first toothed mobile (3) and the second toothed mobile (5) respectively are such that each free space between two consecutive teeth (11; 111) of the first toothed mobile (3) encloses two teeth (21; 121) of the second toothed mobile (5).
